# EUROPEAN PATENT APPLICATION

(11) **EP 0 579 947 A1**
(43) Date of publication of application: **26.01.1994**
(21) Application number: 93109440.3
(22) Date of filing: 14.06.1993
(51) Int. Cl.: D06F 39/04, G05D 23/24, A47L 15/42

(54) **Washing machine with arrangement for controlling the temperature of the electric water heating elements**

(30) Priority: 23.07.1992 IT PN920059
(71) Applicant: Zanussi Elettrodomestici S.p.A., I-33170 Pordenone (IT)
(72) Inventor: Gava, Pietro, I-33170 Pordenone (IT); Cantu', Alessandro, I-20041 Agrate Brianza (MI) (IT)
(74) Representative: Busca, Luciano

(57) **Abstract**

Washing machine having an electric resistance (3) which is connectable to a power source (10), through a switch controlled by the programmer (17), to heat up a fluid contained in a wash tub. A measurement arrangement (13) associated with the programmer (17) includes a pair of terminals (11,12) capable of detecting, across the heating resistance (3), signals that are proportional to the actual ohmic value of the resistance itself, and accordingly to its temperature. The measurement arrangement (13) de-energizes the heating resistance (3) when the signals detected at its terminals (11,12) are indicative of a temperature of the resistance exceeding a predetermined value. It enables temperature measurement without using any thermostat.

## Description

The present invention relates to an automatic washing machine, particularly a dishwasing machine, of the type comprising at least an electric resistance for heating water contained in a wash tub.

As is known, washing machines normally include thermostatic safety devices capable of sensing the temperature of the heating resistance and associated with control arrangements suitable to de-energize the resistance when a temperature is detected exceeding a predetermined value, thereby avoiding overheating.

However, the thermostatic safety devices are responsive to the temperature of rather localized areas of the heating resistance, which usually has a relatively bulky and complex structure. In a dishwasher, for instance, it may happen under given conditions (when the rotary spray arms are jammed in a certain position, for example) that the water jets issuing from the spray arms cool down the area controlled by the thermostat while overheating occurs in the remaining areas of the heating resistance, thereby causing damages in the dishwasher.

It is the object of the present invention to provide a washing machine having electric water heating elements whose temperature is controlled in a simple, effective and entire manner.

According to the invention, this object is attained in a washing machine embodying the features of the appended claims.

The characteristics and advantages of the invention will be more apparent from the following description, given only by way of non-limiting example, with reference to the accompanying drawings, wherein:
- Figure 1 diagrammatically shows the basic component parts of a first embodiment of the washing machine according to the invention; and
- Figure 2 diagrammatically shows a second embodiment of the washing machine according to the invention.

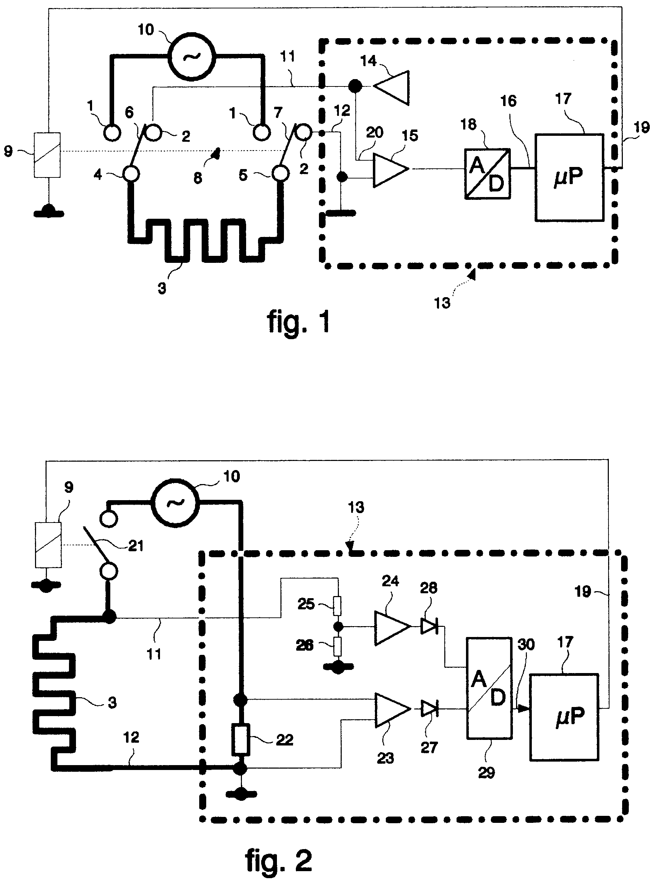

With reference to Figure 1, the washing machine is for example a dishwasher of a substantially traditional type, which is not described in detail and comprises a wash tub in which a fluid (normally water) is supplied to be heated by means of at least an electric resistance 3 controlled by the programmer of the machine. The resistance 3 is a so-called " sheathed" heating resistance, having for instance a rated ohmic value of approximately 10 Ohms. The two terminals 4, 5 of the heating resistance 3 are connected with respective movable contacts (or switches) 6, 7 of a commutator switch 8, which is preferably an electromagnetic commutator controlled by a relay 9. The movable contacts 6, 7 are arranged to concurrently switch between respective fixed contacts 1, 2. The fixed contacts 1 are connected with relevant terminals of a power supply source 10, for example a 220 V alternating voltage. The fixed contacts 2 of commutator switch 8 are connected with respective terminals 11 and 12 of a measurement arrangement 13. This latter comprises a constant current generator 14, preferably generating a 10 mA direct current; generator 14 may for instance comprise a National LM117 integrated circuit and its output corresponds to terminal 11 of the measurement arrangement 13.

The output 11 of the generator 14 is also connected with a first input 20 of an amplifier 15, which is provided with a second input corresponding to the terminal 12 of the measurement arrangement 13. The output of the amplifier 15 drives an input 16 of a microprocessor 17 through an analogue-to-digital converter 18.

The amplifier 15 may for instance comprise a National LM382 integrated circuit, and microprocessor 17 is a Motorola 68HC05, for example. Microprocessor 17 forms part of the programmer of the machine and includes an output 19 by means of which the measurement arrangement 13 drives the relay 9.

Preferably, when the relay 9 is normally de-energized the movable contacts 6, 7 of commutator switch 8 are in the rest position shown in Figure 1, that is, they are connected to their respective fixed contacts 2.

In order for the heating resistance 3 to be actuated, according to the operative programme of the machine, the microprocessor 17 is arranged to periodically generate at output 19 a control signal suitable to excite relay 9, thereby switching movable contacts 6, 7 to the respective fixed contacts 1. Under these operative conditions the resistance 3 is supplied by the power source 10 in order to heat up the water contained in the wash tub of the machine, while it is disconnected from the terminals 11 and 12 of the measurement arrangement 13. In a per se known manner, microprocessor 17 is also arranged to periodically discontinue (every minute, for example) generation of the said control signal for a predetermined measurement period having for instance a duration of approximately 1 sec.

As a result, when the heating resistance 3 is being actuated the movable contacts 6, 7 periodically switch between the respective fixed contacts 1, 2 so as to perform alternated steps in which resistance 3 is supplied and measured, respectively. Such an intermittent energization of the heating resistance occurs during the water heating phases of the machine, provided that the voltage between terminals 11, 12 of the measurement arrangement 13 (and therefore the corresponding voltage applied to the input 16 of microprocessor 17) is lower than a predetermined maximum value. If such a voltage exceeds said predetermined value, microprocessor 17 is arranged to discontinue generation of the control signal and the relay 9 remains de-energized, thereby keeping the heating resistance 3 de-energized.

From the foregoing description the operation of the washing machine as shown in Figure 1 should be apparent. When the water is being heated up, the heating resistance 3 is alternately connected to the power source 10 (for heating the water) and to the measurement arrangement 13. During the steps in which the resistance 3 is connected to the measurement arrangement 13, just the constant current from generator 14 flows through the resistance itself, and the measurement arrangement 13 detects between its terminals 11, 12 (more particularly, between inputs 12 and 20 of amplifier 15) a voltage which is proportional to the ohmic value of resistance 3 and is, therefore, indicative of the actual temperature of the heating resistance. As is well known, in fact, the higher the temperature of an electric resistance the higher its ohmic value, and vice-versa.

If the general operation of the machine is correct the resistance 3 shall never be overheated; thus, the voltage between terminal 11, 12 of the measurement arrangement 13 will not exceed the maximum value mentioned above. Hence, the operation of the machine goes on as described before, with alternating steps in which the heating resistance 3 is supplied and measured, respectively.

By contrast, in case the resistance 3 is overheated for any reason, its ohmic value raises accordingly and the voltage applied between the measurement terminals 11, 12 exceeds the predetermined maximum value. As a result, microprocessor 17 receives a relatively high voltage at its input 16, in response to which it de-energizes relay 9, thereby de-energizing the heating resistance 3. It should be apparent to those skilled in the art that such a de-energization of resistance 3 may be temporary, lasting until the ideal thermal conditions of the heating resistance are possibly restored. As an alternative, microprocessor 17 may be readily arranged to discontinue operation of the whole machine, possibly actuating suitable warning means (not shown) when the voltage between the measurement terminals 11, 12 (and, accordingly, the voltage at input 16 of the microprocessor) exceeds the predetermined value.

In any case, it should be apparent that the washing machine according to the invention is simple in construction and operation, and can control the actual working temperature of the heating resistance 3 in a complete, even and precise manner without the need for any traditional thermostatic control element.

Figure 2 shows an embodiment of the invention which is less precise, but simpler and even more reliable than the embodiment shown in Figure 1 . As it will be apparent hereinafter, in the embodiment as in Figure 2 the actual ohmic value of the heating resistance 3, and therefore its temperature, is measured by calculating the ratio between the voltage across the resistance and the current flowing through the resistance itself.

In Figure 2 similar component parts are represented with similar reference numerals. In particular, the heating resistance 3 is connected to terminals 11, 12 of the measurement arrangement 13 directly. In addition, the resistance 3 is connected across the power source 10 through at least a measurement resistor 22 and a single switch 21 which is normally open and controlled by the relay 9. The resistor 22 has a low ohmic value (e.g. approximately 0.01 Ohms) and is arranged in a shunt fashion, to form the input impedance of an amplifier 23. More particularly, the resistor 22 connects the measurement terminal 12 to the amplifier 23 and comprises a conductor path of a printed circuit, for example. The measurement terminal 11 is connected to the input of a further amplifier 24 through a voltage divider 25, 26. The amplifiers 23, 24 may be similar to amplifier 14 shown in Figure 1.

When the switch 21 is closed to perform a water heating phase, the current flowing through the heating resistance 3 determines a voltage drop across the measurement resistor 22 which is amplified by amplifier 23, rectified by a rectifier 27 and fed to an input (or "driving bus") 30 of the microprocessor 17, as a current signal, through an analogue-to-digital converter 29.

In addition, a voltage is applied to the input of amplifier 24 which is proportional (even though substantially reduced) to the voltage across the heating resistance 3. Such a voltage is amplified by amplifier 24, rectified by a rectifier 28 and fed to the input 30 of microprocessor 17, as a voltage signal , through the converter 29. In a per se known manner, the microprocessor 17 is arranged to compute the ratio between said voltage signal and said current signal, thereby indirectly measuring the ohmic value of the heating resistance 3 and accordingly its actual working temperature. In a similar way as described with reference to Figure 1, the microprocessor 17 is arranged to de-energize the relay 9, and thus the resistance 3, when the said ratio between the voltage and current signals exceeds a predetermined maximum value.

Compared with the embodiment as in Figure 1, the embodiment as in Figure 2 provides the basic advantage of measuring the heating resistance 3 in a continuous manner, without the need for a periodically switching commutator switch 8. Hence, the embodiment as in Figure 2 is even more reliable in operation, as already stated.

Obviously, the washing machine which has been described by way of example may undergo several modifications without departing from the scopes of the invention.

For instance,commutator switch 8 and/or controlled switch 21 may be an electronic switch; furthermore, the measurement arrangement 13 may include electronic component parts of different type and/or interconnected in a different way, provided that they implement the features of the appended claims.

## Claims

1. Washing machine having at least an electric resistance suitable to be connected to a power supply source, through switching means controlled by a programmer of the machine, to heat up a fluid contained in a wash tub, **characterized in that** it comprises a measurement arrangement (13) associated with said programmer (17) and including a pair of terminals (11,12) capable of detecting, across said heating resistance (3), signals that are proportional to the actual ohmic value of the resistance, and accordingly to its temperature, the measurement arrangement (13) being arranged to de-energize the heating resistance (3) when said signals detected at its terminals (11,12) are indicative of a temperature of the resistance exceeding a predetermined value.

2. Washing machine according to claim 1, **characterized in that** said switching means (8) is controlled by said programmer (17) to periodically switch between a rest position, in which the heating resistance (3) is connected between said terminals (11,12) of the measurement arrangement (13) to be supplied with a constant measurement current, and an operative position in which the heating resistance (3) is connected across the power source (10), the heating resistance (3) being thereby energized intermittently, the programmer (17) being arranged to stop the switching means (8) in said rest position when the detected voltage between said terminals (11,12) is indicative of a temperature of the heating resistance (3) exceeding said predetermined value.

3. Washing machine according to claim 1, **characterized in that** said terminals (11,12) of the measurement arrangement (13) are connected with the heating resistance (3) to detect the voltage across it, the measurement arrangement comprising at least a measurement resistor (22) capable of detecting the current flowing through the heating resistance when the latter is connected to the power source (10), the programmer (17) being arranged to de-energize the heating resistance (3) when the ratio between said voltage and said current, as detected by the measurement arrangement (13), is indicative of a temperature of the heating resistance exceeding said predetermined value.
